# EUROPEAN PATENT APPLICATION

(11) **EP 4 492 813 A1**
(43) Date of publication of application: **15.01.2025**
(21) Application number: 24187864.4
(22) Date of filing: 10.07.2024
(51) Int. Cl.: H04Q 1/02

(54) **RACK, TEST MODULE AND MODULAR SYSTEM COMPRISING SUCH RACK AND SUCH TEST MODULE**

(30) Priority: 11.07.2023 IT 202300014469
(71) Applicant: Alfamotion S.p.A., 20851 Lissone (MB) (IT)
(72) Inventor: ARIGOSSI, Mauro, 20900 Monza e Brianza (MB) (IT)
(74) Representative: Biallo, Dario

(57) **Abstract**

A rack (100) is described, that comprises a front wall (122) comprising in turn a plurality of openings (123), the rack (100) comprises a plurality of traverses (124', 124", 124‴) placed at a distance and in succession to each other, defining at least one interspace (125), each traverse (124', 124'', 124''') is placed at a predetermined distance (D1, D2, D3) from said front wall (122).

A test module (200) is also described, which extends for a predetermined length (L1, L2, L3), and comprises a box-shaped body (210) comprising a bottom wall (211) that comprises in turn a first air intake (212), the test module (200) comprises front connectors (230). Finally, a modular system (300) is described comprising said rack (100) and said test module (200), wherein the bottom wall (211) is fixed to a respective traverse (124', 124", 124‴), wherein the first air intake (212) of each test module (200) faces the interspace (125), wherein the front connectors (230) are housed in a respective opening (123) of the front wall (122), wherein the predetermined length (L1, L2, L3) of one or more of said modules (200) is equal to the predetermined distance (D1, D2, D3).

## Description

The present invention relates to a rack, a test module, and a modular system comprising such a rack and such a test module.

The present invention is usefully employed in the field of information technology and telecommunications for housing modular hardware components of various utility and size, which are connectable to external hardware devices that require audio/video validation tests. Modular systems are known, comprising cabinets commonly called racks, or rack cabinets, in which specific modules, called test modules, are installed and housed, allowing to carry out various evaluation and functionality tests of an external hardware device connected to one or more of such modules.

The test modules are particularly provided with an electronic unit enclosed within a protective box-shaped body that has connectors.

The size of the test module depends on the type of test to be conducted, the type of module to be housed in the rack, and the type of external hardware device to be connected to the module.

Known racks comprise a support frame and drawer housing elements on which the test modules are installable. In more detail, the housing elements comprise a traverse, hookable to an end of the test module, and a front that is spaced from the traverse and provided with openings. In particular, when a test module is installed on a rack, the end opposed to that fixed to the traverse abuts the front, so that the connectors of the test module are placed at the openings of the front to allow the test module to be connected to the hardware device to be tested.

Disadvantageously, it is possible to install in a housing element only the test modules equipped with a length equal to the distance between the front and the traverse.

Disadvantageously, in order to install test modules of different lengths, different housing elements are required, each compatible with a respective length of the test module.

Thus, disadvantageously, it is not possible to hook test modules having lengths different from each other to the same housing element.

The object of the present invention is to overcome the above-mentioned drawbacks, and particularly to ideate a rack compatible with test modules of different lengths, a test module compatible with such a rack, and a modular system comprising such a rack and such a test module.

These and other objects according to the present invention are achieved by making a rack as set forth in claim 1, a test module as set forth in claim 2, and a modular system as set forth in claim 8.

Further features of the rack, the test module, and the modular system are the object of the dependent claims. The features and advantages of a rack, a test module, and a modular system according to the present invention will be more apparent from the following exemplary and non-limiting description, referred to the attached schematic drawings, in which:
- Figure 1a is a partially exploded perspective view of a modular system comprising a rack and test modules according to the present invention in a configuration ready for use;
- Figure 1b is a partially exploded perspective view of a modular system comprising a rack and test modules according to the present invention, in a mounting configuration;
- Figure 2a is a front perspective view of a portion of the modular system of Figures 1a and 1b;
- Figure 2b is a rear perspective view of the portion of the modular system of Figure 2a;
- Figure 2c is a front perspective view of the portion of the modular system of Figure 2a with a test module being installed;
- Figure 2d is a rear perspective view of the portion of the modular system of Figure 2c;
- Figure 3a is a top view of the portion of the modular system of Figures 2a and 2b;
- Figure 3b is a bottom view of the portion of the modular system of Figures 2a, 2b, and 3a;

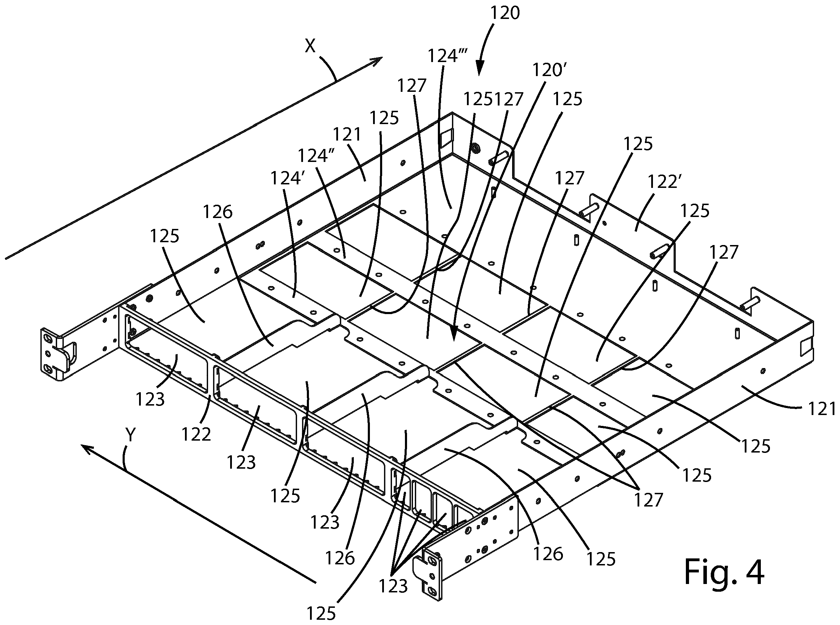

- Figure 4 is a front perspective view of a housing element of a rack according to the present invention;

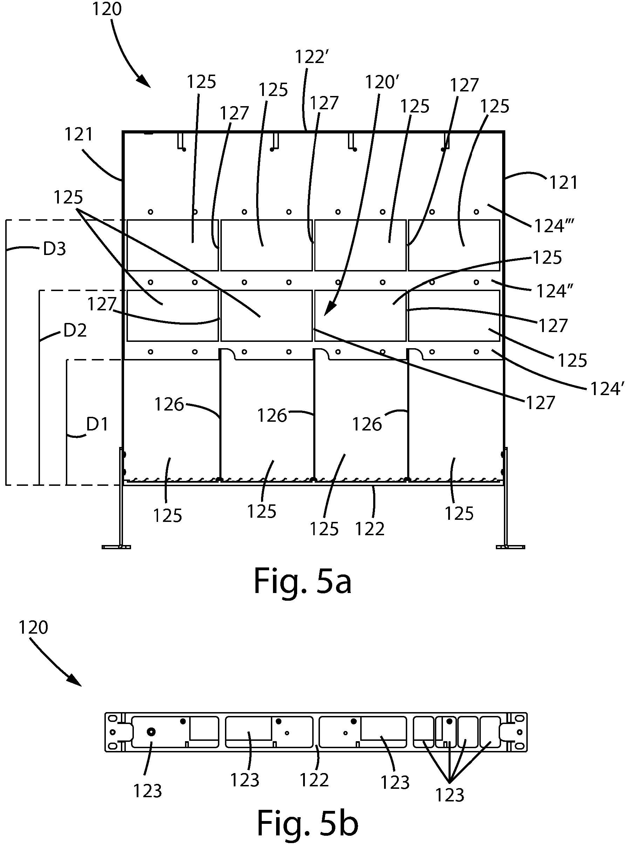

- Figure 5a is a top view of the housing element of Figure 4;
- Figure 5b is a front view of the housing element of Figures 4 and 5a;
- Figure 6a is an exploded top perspective view of a box-shaped body of a test module according to the present invention;
- Figure 6b is an exploded bottom perspective view of the box-shaped body of Figure 6a;
- Figure 7 is a top perspective view of a test module according to the present invention;

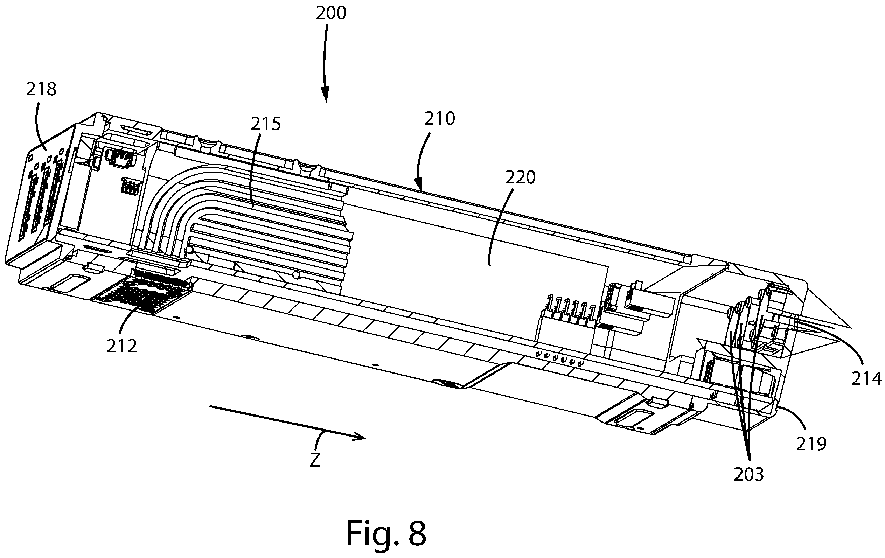

- Figure 8 is a sectional view of the test module of Figure 7 taken along line VIII-VIII.

With reference to the figures, a modular system, overall indicated by 300, is described, comprising a rack, overall indicated by 100, and one or more test modules. In accordance with the present description, the test modules according to the present invention are indicated by the reference number 200, while already known standard test modules are indicated by the reference number 200'.

In the present description, modular system means the set given by a rack and one or more test modules installed on the rack.

In the present description, rack means a structure adapted to house test modules, which thus does not also include the test modules.

In the present description, test modules mean devices that can be housed in the rack and allow to carry out various evaluation and functionality tests of an external hardware device connected to one of such test modules.

The rack 100 is configured to house one or more test modules 200.

The rack 100 comprises a frame 110 and at least one drawer housing element 120 coupled to the frame 110.

The at least one housing element 120 has two side walls 121 opposed to each other and coupled to the frame 110. The side walls 121 extend along a first direction X of main development.

The rack 100 comprises a front wall 122 interposed between the side walls 121 and transverse to such side walls 121. Therefore, the front wall 122 extends from one side wall 121 to the other.

The front wall 122 comprises a plurality of openings 123. More details on the openings 123 will be set forth later in the present description.

Optionally, the housing element 120 also comprises a back wall 122' opposed to the front wall 122.

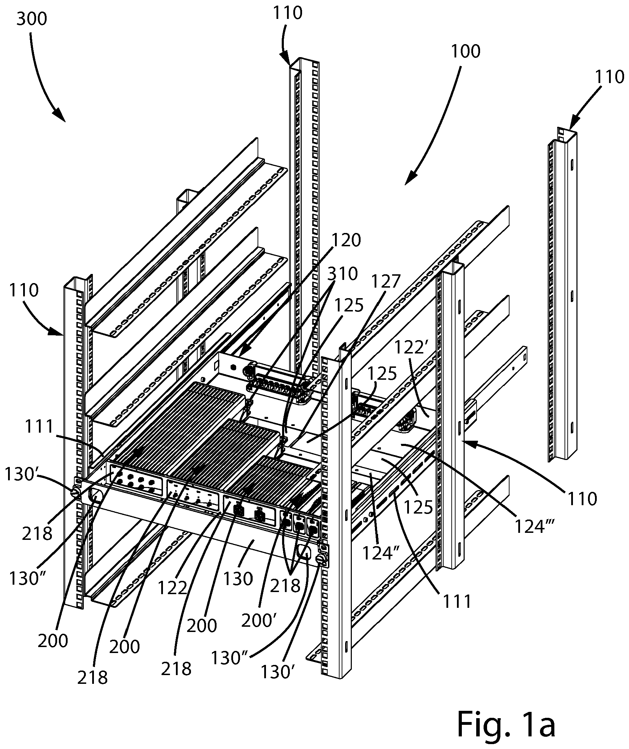

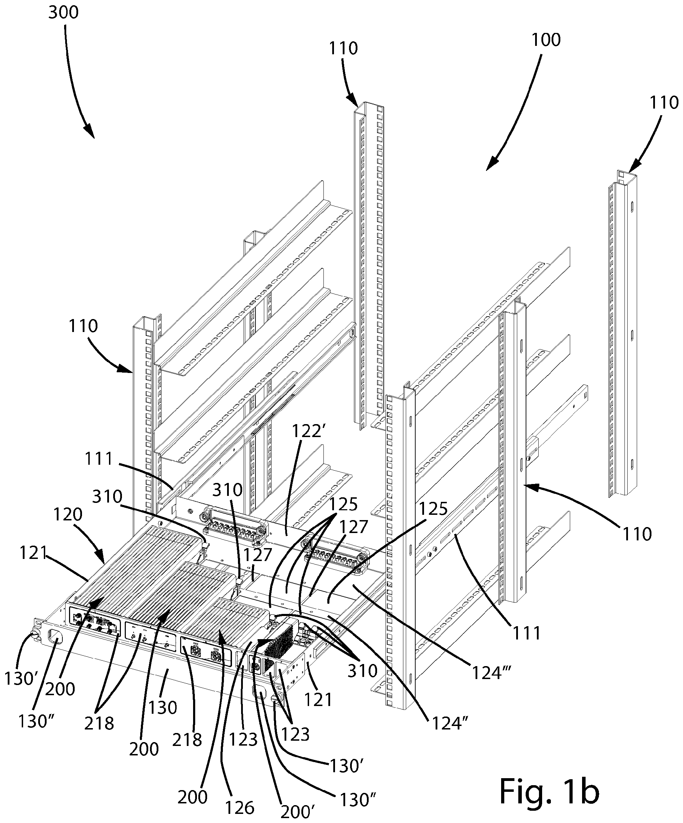

The rack 100 comprises a plurality of traverses 124', 124'', 124''' fixable to one or more test modules 200. It should be noted that the rack 100 is further compatible with one or more standard test modules 200', visible in Figures 1-3b, although not described in the present description.

The traverses 124', 124'', 124''' extend between the side walls 121 along a second direction Y of main development, which is transverse with respect to the first direction X.

In particular, the side walls 121, the front wall 122, and the traverses 124', 124'', 124‴ delimit a housing seat 120' in which the test modules 200 can be installed.

In accordance with the present invention, the traverses 124', 124'', 124‴ are placed at a distance and in succession to each other along the first direction X defining at least one interspace 125.

The at least one interspace 125 is a free space defined by at least one side wall 121, the front wall 122, and a respective traverse 124', or by at least one side wall 121 and two respective traverses 124', 124'', 124‴.

It should be noted that each traverse 124', 124'', 124‴ is placed at a predetermined distance D1, D2, D3 from the front wall 122.

In a particular embodiment shown in the figures, the traverses 124', 124'', 124''' are three in number and identify a first traverse 124', a second traverse 124'', and a third traverse 124'''. The first traverse 124' is located at distance D1 from the front wall 122, the second traverse 124" is located at distance D2 from the front wall 122, and the third traverse 124‴ is located at distance D3 from the front wall 122. The distance D1 is less than the distance D2, which in turn is less than the distance D3. In other words, the first traverse 124' means the traverse closest to the front wall 122, while the third traverse 124''' means the traverse furthest from the front wall 122.

Furthermore, still in accordance with such embodiment, the traverses 124', 124'', 124‴ identify three interspaces 125 respectively placed between the front wall 121 and the first traverse 124', between the first traverse 124' and the second traverse 124'', and between the second traverse 124'' and the third traverse 124‴.

Preferably, the housing element 120 comprises separation walls 126 transverse to the plurality of traverses 124', 124'', 124‴. The separation walls 126 are configured to separate the test modules 200 from each other when they are housed in the housing element 120.

The separation walls 126 extend from the front wall 122 to a traverse 124', 124'', 124‴. More preferably, the separation walls 126 extend from the front wall 122 to the first traverse 124'.

Still preferably, the housing element 120 comprises support elements 127 interposed along the first direction X between one traverse 124', 124'' and the other 124'', 124‴. In particular, the support elements 127 extend between the first traverse 124' and the second traverse 124'', and also between the second traverse 124" and the third traverse 124‴.

The separation walls 126 and the support elements 127 also define the interspaces 125.

Preferably, the first direction X is substantially perpendicular to the second direction Y. In other words, the two side walls 121 are perpendicular to the traverses 124', 124'', 124‴. Still preferably, the front wall 122 is substantially perpendicular to the side walls 121 and substantially parallel to the traverses 124', 124'', 124'''.

Preferably, the frame 110 comprises two guides 111 parallel and opposed to each other. Each guide 111 is slidably coupled to a respective side wall 121. Thus, the side walls 121 can slide along the respective guide 111 to allow the test modules 200 to be mounted or dismounted in the housing element 120.

Advantageously, the guides 111 facilitate the extraction of the housing element 120 to allow access to the housing element 120 and the test modules 200 when they are mounted.

Preferably, the guides 111 are telescopic.

Optionally, the housing element 120 comprises a fixing element 130.

In particular, the fixing element 130 is coupled to the side walls 121 and faces the front wall 122 on the side opposed to the traverses 124', 124'', 124‴.

The fixing element 130 is configured to be fixed by screws 130' to the frame 110 and the housing element 120, to fix the housing element 120 to the frame 110, as visible in Figure 1a.

Such fixing element 130 can also function as a handle when not fixed to the frame 110, to enable the possible mounting or dismounting of the test modules 200, as shown in Figure 1b.

In such case, the fixing element 130 comprises two handles 130" to allow the fixing element 130 to be grasped with the fingers. Preferably, the fixing element 130 also has a protective function. The fixing element 130 is, for example, made of plexiglass.

For example, the rack 100 has, along a direction substantially perpendicular to the housing element 120, a height between 45 and 50 centimetres, preferably 48.26 centimetres (19 inches).

For example, as shown in the attached figures, the housing element 120 has dimensions so as to be adaptable to several combinations of test modules 200, 200' having different widths, adapted to accommodate, for example, sixteen standard test modules 200'.

In accordance with the present invention, each test module 200 is configured to be housed in the rack 100. However, the test modules 200 are also usable outside the rack 100, with control and power via ethernet cable (PoE, Power over Ethernet).

The test module 200 extends along a third direction Z of main development for a predetermined length L1, L2, L3 between a first end 201 and a second end 202 opposed to the first end 201.

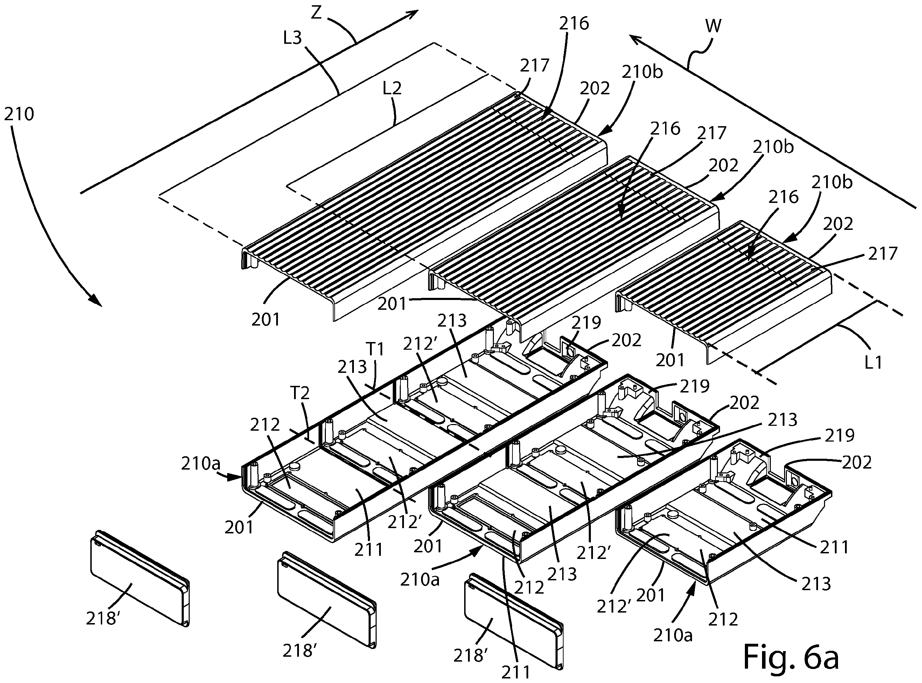

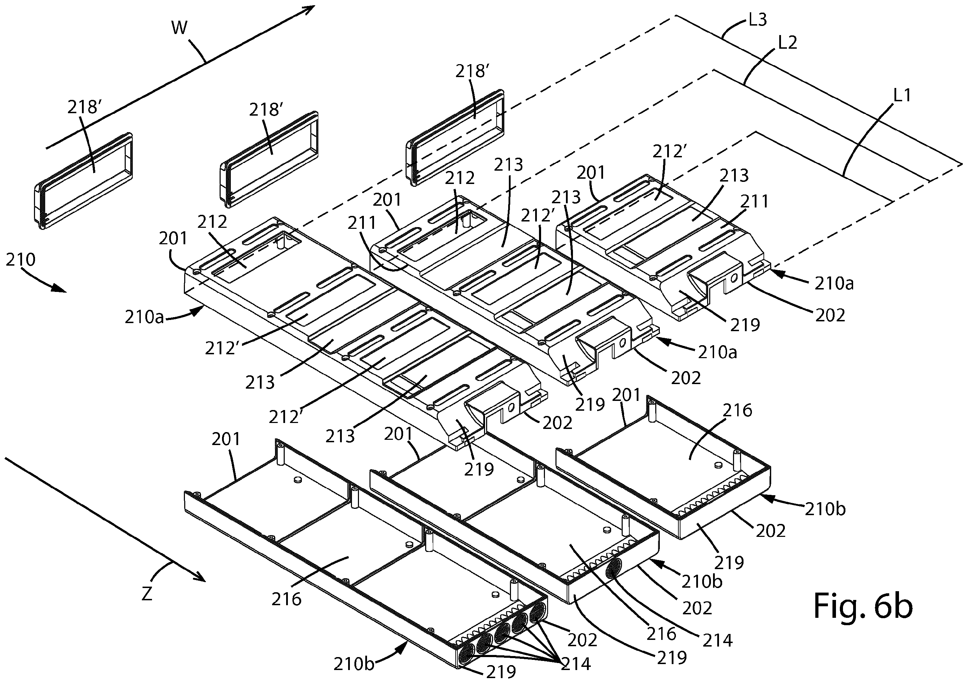

As shown with particular reference to Figures 6a and 6b, the test module 200 comprises a box-shaped body 210 that comprises a bottom wall 211 configured to be fixed to a respective traverse 124', 124'', 124‴. Furthermore, the box-shaped body 210 has a top wall 216 opposed to the bottom wall 211.

The box-shaped body 210 further has a frontal wall 218 and a rear wall 219.

The frontal wall 218 is opposed to the rear wall 219 along the third direction Z.

The frontal wall 218 is configured to face the front wall 122 of the housing element 120 when the test module 200 is installed in the rack 100, while the rear wall 219 is configured to be placed at a traverse 124', 124", 124‴.

The bottom wall 211 further comprises a first air intake 212 positioned so that when the test module 200 is fixed to a respective traverse 124', 124'', 124''', the first air intake 212 faces the at least one interspace 125.

Furthermore, the test module 200 comprises an electronic unit 220 enclosed in the box-shaped body 210.

In other words, the electronic unit 220 is enclosed between the bottom wall 211 and the top wall 216, and between the frontal wall 218 and the rear wall 219.

The test module 200 comprises one or more front connectors 230 adapted to connect respective cables (not shown) to the electronic unit 220.

The cables are, for example, cables of an external hardware device to be tested.

Each front connector 230 is particularly placed in data communication with the electronic unit 220 and is therefore adapted to put the external device to be tested in data communication with the electronic unit 220 by means of cables connected on one side to the external hardware device to be tested and on the other side to the front connector 230.

In particular, it should be noted that the front connectors 230 are positioned so that when the test module 200 is fixed to a respective traverse 124', 124'', 124''', the front connectors 230 are housed in a respective opening 123 of the front wall 122.

The front connectors 230 are arranged at the frontal wall 218.

As shown in Figures 6a and 6b, the bottom wall 211 has at least one groove 213 that extends along a fourth direction W of main development that is transverse to the third direction Z.

In a particular embodiment, the groove 213 is positioned so that when the test module 200 is fixed to a respective traverse 124', 124'', 124''', the groove 213 is arranged at a different traverse 124', 124'', 124‴.

The box-shaped body 210 can comprise one or more second air intakes 214 arranged at the second end 202.

According to an embodiment, the test module 200 having a length L2 comprises a single second air intake 214. Still in accordance with such embodiment, the test module 200 having a length L3 comprises two or more, for example five, second air intakes 214.

Preferably, the test module 200 having a length L1 does not comprise second air intakes.

Test modules 200 with lengths L2 and L3 can also not comprise second air intakes.

In more detail, the one or more second air intakes 214 are positioned on the rear wall 219.

The one or more second air intakes 214 are placed downstream of the first air intake 212 and the electronic unit 220.

Furthermore, the test module 200 can comprise one or more fans 203 placed at a second air intake 214. Each fan 203 is configured to generate an air flow between the first air intake 212 and the respective second air intake 214. Such air flow is adapted to cool the electronic unit 220.

According to an embodiment, the test module 200 having a length L2 comprises a single fan 203. Still in accordance with such embodiment, the test module 200 having a length L3 comprises two or more, for example, five fans 203. Still preferably, the number of fans 203 is equal to the number of second air intakes 214. Preferably, the test module having a length L1 does not comprise fans if it does not comprise second air intakes.

Test modules 200 having lengths L2 and L3 can also not comprise fans.

Preferably, the test module 200 comprises a finned portion 215 placed in the box-shaped body 210 and associated with the electronic unit 220.

The finned portion 215 is configured to direct the air flow from the first air intake 212 to the one or more second air intakes 214.

In more detail, the finned portion 215 is placed in fluid communication with the first air intake 212 and with the one or more second air intakes 214. Advantageously, the air flow can pass from the first air intake 212 to the one or more second air intakes 214 along the electronic unit 220, cooling the latter. Preferably, the outer surface of the top wall 216 has longitudinal fins 217 that extend along the third direction Z.

Such longitudinal fins 217 are designed to address an external air flow to the box-shaped body 210 from the first end 201 to the second end 202.

Preferably, the predetermined length L1, L2, L3 of a test module 200 is between 110 mm and 170 mm or between 190 mm and 250 mm or between 270 mm and 330 mm.

The test module 200 having a length L1 has a single groove 213 configured to be arranged in the interspace 125 identified between the front wall 122 and the first traverse 124'.

The test module 200 having a length L2 has two grooves 213, one configured to be arranged in the interspace 125 identified between the front wall 122 and the first traverse 124' and the other configured to rest on the first traverse 124'.

The test module 200 having a length L3 has two grooves 213, one configured to rest on the first traverse 124' and the other configured to rest on the second traverse 124'' .

Preferably, the box-shaped body 210 is formed from a first half-shell 210a and a second half-shell 210b that are assembled together to form the test module 200. In particular, the first half-shell 210a identifies the bottom wall 211 and a part of the rear wall 219, while the second half-shell 210b identifies the top wall 216 and a part of the rear wall 219.

The above-mentioned second air intakes 214 are specifically made on the second half-shell 210b.

When the first half-shell 210a and the second half-shell 210b are assembled together, a semi-closed structure is formed, which is open at the first end 201.

In a non-use assembled configuration, as illustrated in Figures 6a and 6b, the test module 200 comprises a first covering element 218' arranged at the first end 201.

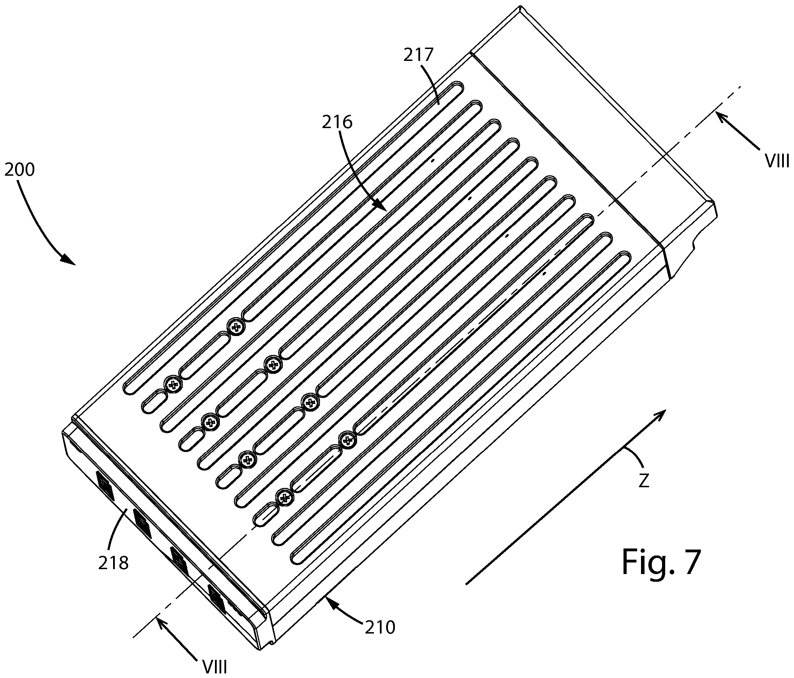

In a use assembled configuration, as illustrated in Figures 1a, 2a, 2b, 3a, 3b, and 7, the test module 200 comprises a second covering element that identifies the frontal wall 218 and the front connectors 230 mentioned above.

Preferably, the first half-shell 210a of the test modules 200 having lengths L1 and L2 is obtained from the first half-shell 210a of the test module 200 having a length L3.

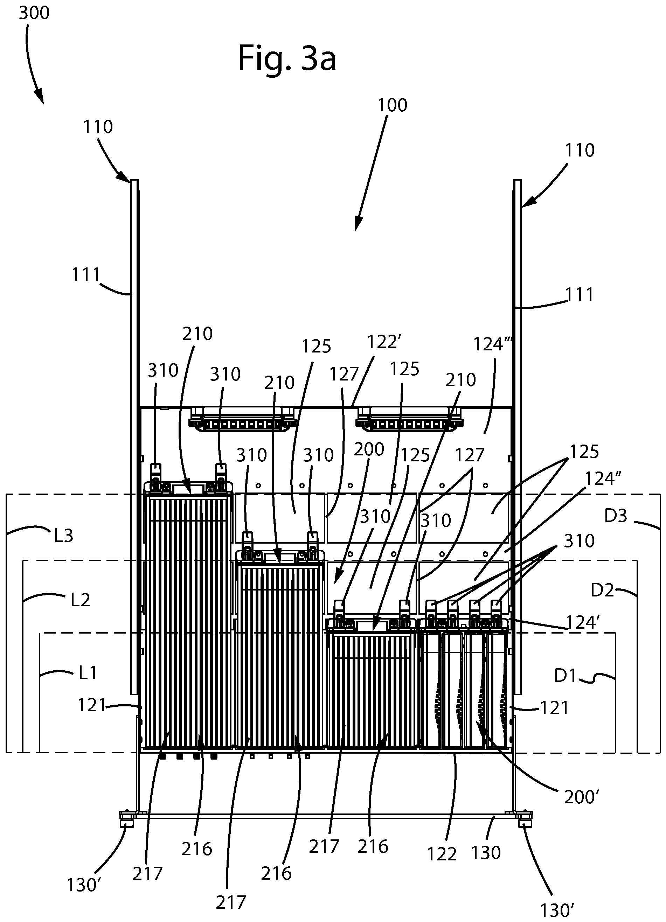

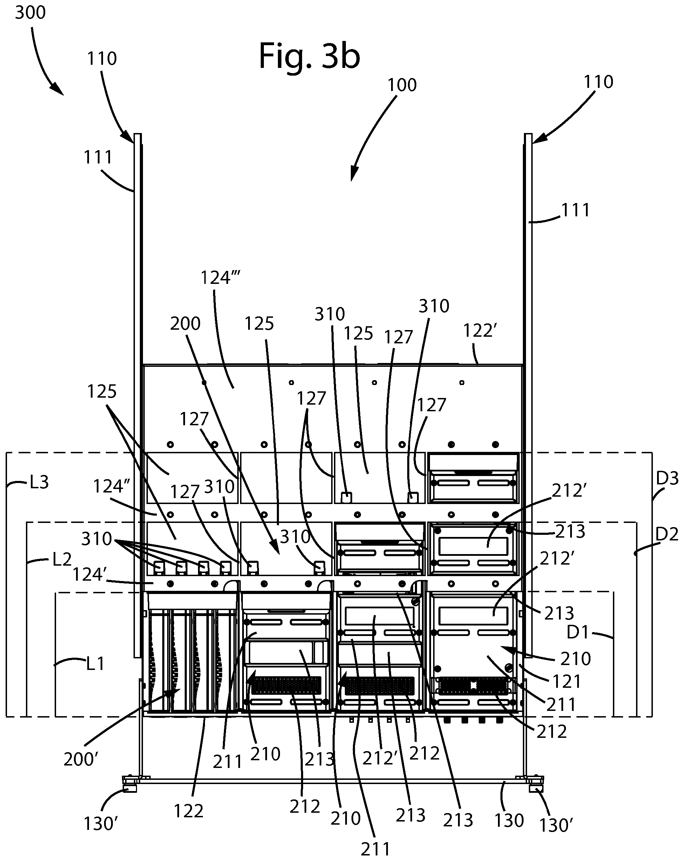

In particular, according to the embodiment illustrated in the figures, preferably the first half-shell 210a of the test module 200 having a length L3 has two grooves 213 and three potential air intakes, of which a first air intake 212 is open and two air intakes 212' are plugged, as particularly visible in Figures 3b, 6a, and 6b.

The rear wall 219 is common to all three test modules 200 having lengths L1, L2, and L3.

Therefore, in order to form the box-shaped body 210 of the test modules 200 having a length L1, the first half-shell 210a having a length L3 is cut in a direction substantially parallel to the fourth direction W between the two grooves 213 along the cutting line T1 shown in Figure 6a.

Therefore, the first half-shell 210a thus formed having a length L1 is assembled with a suitable second half-shell 210b of length L1 to form the box-shaped body 210 of the test module 200 of length L1.

Similarly, in order to form the box-shaped body 210 of the test modules 200 having a length L2, the first half-shell 210a having a length L3 is cut in a direction substantially parallel to the fourth direction W between the first end 201 and the groove 213 along the cutting line T2 shown in Figure 6a. Subsequently, the plugged air intake 212' is appropriately opened to form the first air intake 212. Therefore, the first half-shell 210a thus formed of length L2 is assembled with a suitable second half-shell 210b of length L2 to form the box-shaped body 210 of the test module 200 of length L2.

Advantageously, starting from a single type of first half-shell 210 of length L3, three types of test modules 200 of different lengths can be obtained. Optionally, the second half-shell 210b of the test modules 200 having lengths L1 and L2 is also obtained from the second half-shell 210b of the test module 200 having a length L3, which is appropriately cut.

In the modular system 300, the test modules 200 are configured to be housed in the housing seat 120' of the housing element 120.

In particular, preferably, the above-described rack 100 is compatible with test modules 200 of three different predetermined lengths L1, L2, L3.

Still preferably, the modular system 300 comprises a test module 200 having a length L1 between 110 mm and 170 mm, a test module 200 having a length L2 between 190 mm and 250 mm, and a test module 200 having a length L3 between 270 mm and 330 mm.

As reported above, the rack 100 is further compatible with already known standard test modules 200', having a length equal to L1 as depicted in Figures 1a-3b.

In the modular system 300, the bottom wall 211 of each test module 200 is fixed to a respective traverse 124', 124'', 124''', and the first air intake 212 of each test module 200 faces the respective interspace 125. Furthermore, the front connectors 230 of each test module 200 are housed in a respective opening 123 of the front wall 122.

In this way, it is possible to connect the cables of the hardware device to be tested to the front connector 230 through the opening 123.

Advantageously, the shape of the front wall 122 and that of the openings 123, as well as that of the front connectors 230, optimize the space and improve the aesthetics of the rack 100, even in the presence of front connectors 230 different from each other.

The predetermined length L1, L2, L3 of the test modules 200 is substantially equal to the predetermined distance D1, D2, D3.

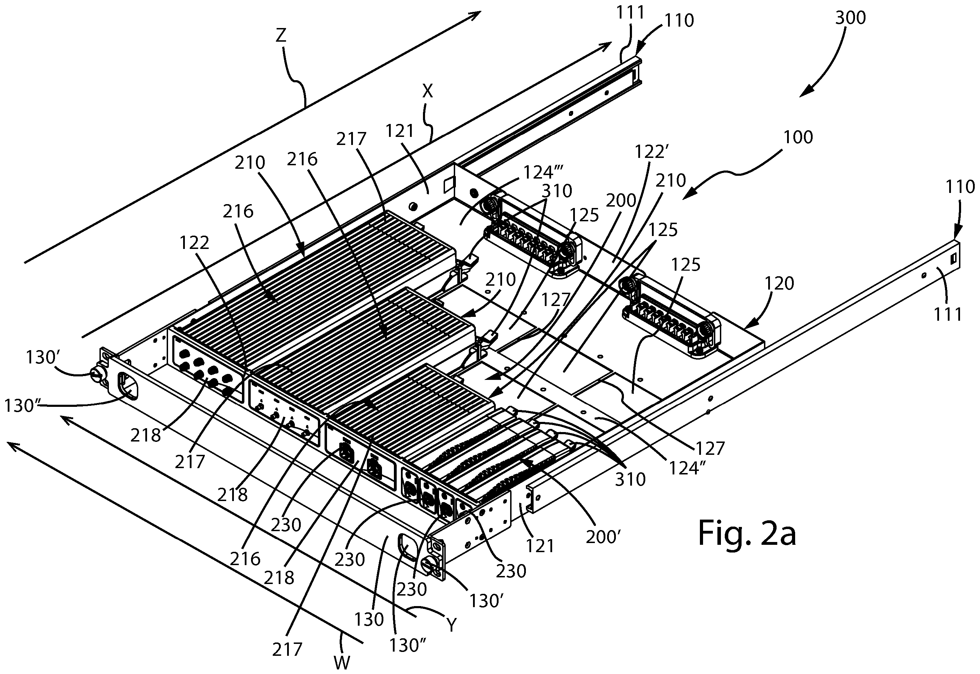

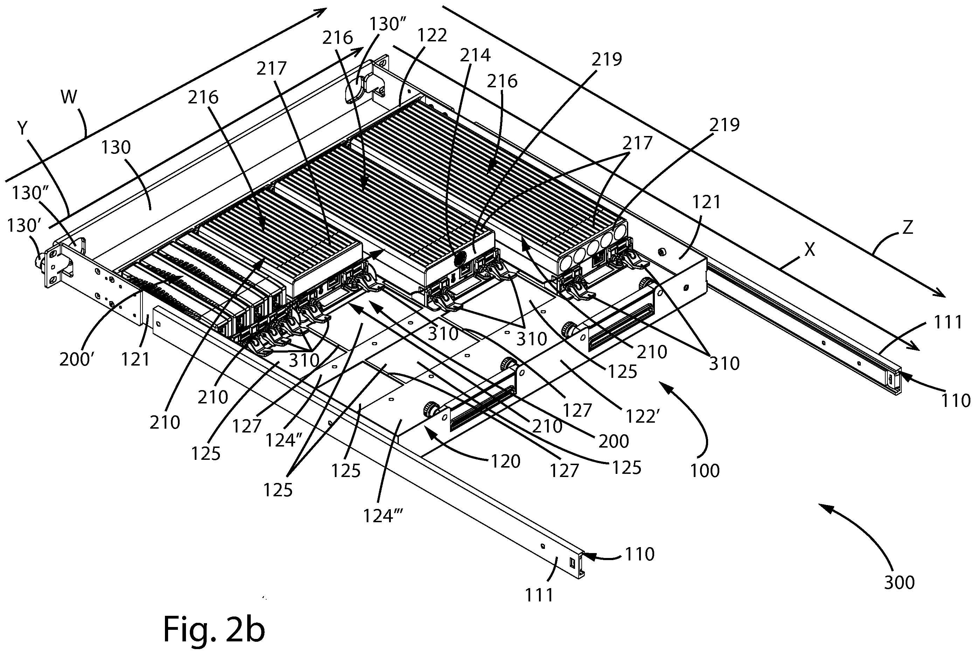

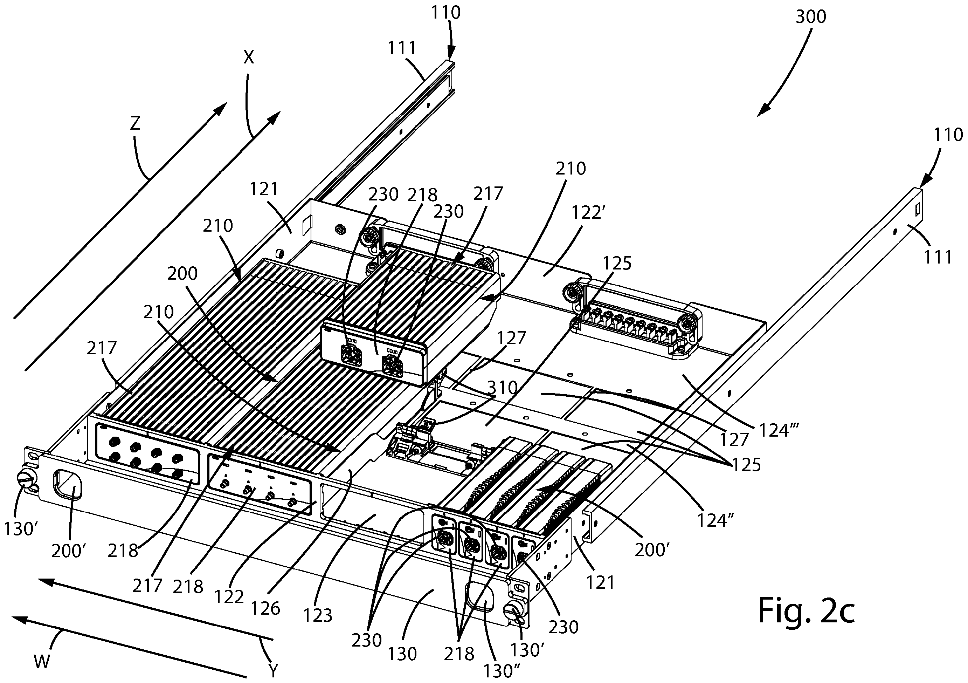

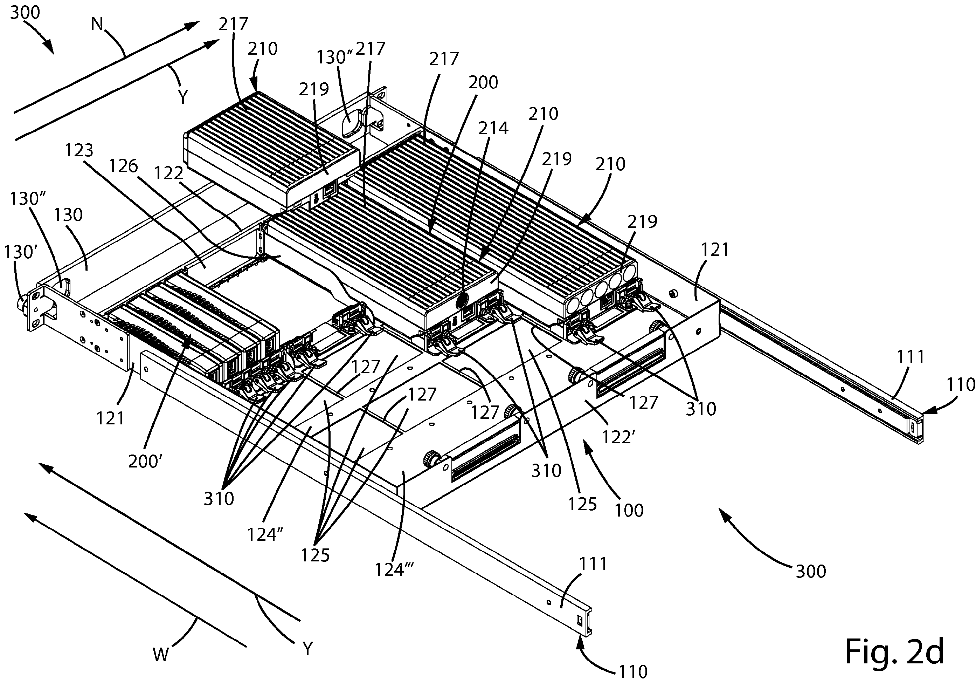

In more detail, as particularly visible in Figures 2a-3b, the test module 200 having a length L1 extends between the front wall 122 and the first traverse 124'. The bottom wall 211 of such test module 200 is fixed to the first traverse 124' and has a groove 213 arranged in the interspace 125 identified between the front wall 122 and the first traverse 124'.

The test module 200 having a length L2 extends between the front wall 122 and the second traverse 124". The bottom wall 211 of such test module 200 is fixed to the second traverse 124" and has a groove 213 resting on the first traverse 124'.

The test module 200 having a length L3 extends between the front wall 122 and the third traverse 124‴. The bottom wall 211 of such test module 200 is fixed to the third traverse 124''' and has two grooves 213, one resting on the first traverse 124' and the other resting on the second traverse 124''.

In any case, the first air intake 212 faces the interspace 125. In more detail, the first air intake 212 faces the interspace 125 identified between the front wall 122 and the first traverse 124'.

Therefore, the box-shaped bodies 210 of the test modules 200 having a predetermined length L1, L2, L3 each have a part equal to each other that comprises at least the rear wall 219, a groove 213, and the first air intake 212.

Preferably, the third direction Z is aligned with the first direction X and the fourth direction W is aligned with the second direction Y. In other words, the modules 200 are aligned with the side walls 121 of the rack 100 and the grooves 213 are aligned with the traverses 124', 124'', 124'''.

The modular system 300 comprises hooking means 310 that couple the test modules 200 to a respective traverse 124', 124'', 124‴. More specifically, the hooking means 310 couple the bottom walls 211 of the test modules 200 to the traverses 124', 124'', 124‴.

The hooking means 310 are preferably a lever arranged at the rear wall 219.

The hooking means 310 are couplable to any traverse 124', 124'', and 124''' depending on the length of the test module 200 to be installed in the rack 100.

Advantageously, such hooking means allow to quickly hook the test module to the housing element, allowing to optimize the available internal space and avoiding the use of screws that would require access space constraints.

Advantageously, the plurality of traverses allow test modules of lengths different to each other to be housed in the rack, particularly on the same housing element. Furthermore, the grooves of the test modules that extend from the front wall beyond the first traverse allow such test modules to be securely and stably housed.

From the above description, the features of the rack, the test module, and the modular system object of the present invention are clear, as are the related advantages.

Finally, it is clear that the rack, the test module, and the modular system thus conceived are susceptible of a number of modifications and variants, all falling within the invention; furthermore, all details can be replaced by technically equivalent elements. In practice, the used materials, as well as the dimensions, can be any depending on the technical requirements.

## Claims

1. Rack (100) comprising:
- a frame (110) and
- at least one drawer housing element (120) coupled to the frame (110), said at least one housing element (120) having:
- two side walls (121) opposed to each other and coupled to the frame (110), said side walls (121) extending along a first direction (X) of main development,
- a front wall (122) interposed between said side walls (121) and transverse to said side walls (121), said front wall (122) comprising a plurality of openings (123),
- a plurality of traverses (124', 124'', 124‴) fixable to one or more test modules (200), said traverses (124', 124'', 124''') extending between the side walls (121) along a second direction (Y) transverse with respect to said first direction (X), said traverses (124', 124'', 124''') being placed at a distance and in succession to each other along said first direction (X) defining at least one interspace (125), each traverse (124', 124'', 124''') being placed at a predetermined distance (D1, D2, D3) from said front wall (122).

2. Test module (200) configured to be housed in a rack (100) according to claim 1, said test module (200) extending along a third direction (Z) of main development for a predetermined length (L1, L2, L3) between a first end (201) and a second end (202) opposed to the first end (201), said test module (200) comprising:
- a box-shaped body (210) comprising:
- a bottom wall (211) configured to be fixed to a respective traverse (124', 124'', 124‴), said bottom wall (211) comprising a first air intake (212) positioned so that when said test module (200) is fixed to a respective traverse (124', 124'', 124''') said first air intake (212) faces said interspace (125),
- an electronic unit (220) enclosed in said box-shaped body (210);
- one or more front connectors (230) adapted to connect respective cables to said electronic unit (220), said front connectors (230) being positioned so that when said test module (200) is fixed to a respective traverse (124', 124'', 124‴) said front connectors (230) are housed in a respective opening (123) of said front wall (122).

3. Test module (200) according to claim 2, wherein said bottom wall (211) has at least one groove (213) extending along a fourth direction (W) of main development transverse to said third direction (Z); said groove (213) being positioned so that when said test module (200) is fixed to a respective traverse (124', 124'', 124‴) said groove (213) is arranged at a different traverse (124', 124'', 124‴).

4. Test module (200) according to claim 2 or 3, wherein said box-shaped body (210) comprises one or more second air intakes (214) arranged at said second end (202), each second air intake (214) being placed downstream of said first air intake (212) and of said electronic unit (220), said test module (200) comprising one or more fans (203), each placed at a second air intake (214) and configured to generate an air flow between said first air intake (212) and the respective second air intake (214).

5. Test module (200) according to claim 4, comprising a finned portion (215) placed in said box-shaped body (210) and associated with the electronic unit (220); said finned portion (215) being configured to direct said air flow from the first air intake (212) to said one or more second air intake (214).

6. Test module (200) according to any claim from 2 to 5, wherein said box-shaped body (210) has a top wall (216) opposed to said bottom wall (211), the outer surface of said top wall (216) having longitudinal fins (217) extending along said third direction (Z).

7. Test module (200) according to any of claims 2 to 6 wherein said predetermined length (L1, L2, L3) is between 110 mm and 170 mm or between 190 mm and 250 mm or between 270 mm and 330 mm.

8. Modular system (300) comprising:
- a rack (100) according to claim 1,
- one or more test modules (200) according to any claim from 2 to 7,
wherein:
the bottom wall (211) of each test module (200) is fixed to a respective traverse (124', 124'', 124‴) and the first air intake (212) of each test module (200) faces said interspace (125), the front connectors (230) of each test module (200) being housed in a respective opening (123) of said front wall (122), wherein the predetermined length (L1, L2, L3) of said one or more of said modules (200) is substantially equal to said predetermined distance (D1, D2, D3).

9. Modular system (300) according to claim 8, wherein said third direction (Z) is aligned to said first direction (X) and wherein said fourth direction (W) is aligned to said second direction (Y).

10. Modular system (300) according to claim 8 or 9, comprising hooking means (310) coupling the bottom wall (211) of said one or more test modules (200) to a respective traverse (124', 124'', 124‴).
